# EUROPEAN PATENT APPLICATION

(11) **EP 4 431 829 A1**
(43) Date of publication of application: **18.09.2024**
(21) Application number: 22924990.9
(22) Date of filing: 12.12.2022
(51) Int. Cl.: F24H 1/00, F24H 4/02

(54) **HEAT RECOVERY DEVICE, HEAT RECOVERY METHOD, AND STEEL SHEET MANUFACTURING METHOD**

(30) Priority: 03.02.2022 JP 2022015470
(71) Applicant: JFE Steel Corporation, Tokyo 100-0011 (JP)
(72) Inventor: KUROKI Takashi, Tokyo 100-0011 (JP); FUJII Kenichi, Tokyo 100-0011 (JP); YASUFUKU Yusuke, Tokyo 100-0011 (JP); CHENG Zongtao, Tokyo 100-0011 (JP); KUROKAWA Akinobu, Tokyo 100-0011 (JP); TAMURA Sho, Tokyo 100-0011 (JP)
(74) Representative: Grünecker Patent- und Rechtsanwälte PartG mbB
(86) International application number: PCT/JP2022/045662
(87) International publication number: WO 2023/149086

(57) **Abstract**

To provide a heat recovery device and a heat recovery method each capable of maximizing the energy-saving effect, and a method for producing a steel material. The heat recovery device includes one heat exchanger that exchanges heat between high-temperature drainage water after being used for cleaning in a cleaning process for a steel sheet and make-up water for a cleaning process; another heat exchanger that recovers heat from the drainage water having a temperature lowered via the one heat exchanger through heat exchange with a low-temperature-side heat source of a heat pump; and a heat pump that heats the make-up water having a temperature increased via the one heat exchanger, using heat recovered in the low-temperature-side heat source and power supplied to a compressor and an evaporator, and then supplies the heated make-up water as high-temperature make-up water. The heat recovery method includes exchanging heat between high-temperature drainage water after being used for cleaning in a cleaning process for a steel sheet and make-up water for a cleaning process; exchanging heat between the drainage water and a low-temperature-side heat source of a heat pump, thereby recovering heat from the drainage water having a temperature lowered through heat exchange as the low-temperature-side heat source of the heat pump; and heating the make-up water having a temperature increased through heat exchange, using the recovered heat and power supplied to a compressor and an evaporator, and then supplying the heated make-up water as high-temperature make-up water.

## Description

### Technical Field

The present invention relates to a heat recovery device and a heat recovery method, each for use in a cleaning process for a steel sheet, and a method for producing a steel sheet using the heat recovery method.

### Background Art

In a cleaning processing device for a steel sheet, a cleaning solution or a heating medium, such as hot water, to be supplied to a cleaning solution tank is typically heated by steam or by a known heater using electricity.

However, since the heater is used to heat to a desired temperature by resistance heating or induction heating, the power consumption of the heater is high. Meanwhile, using steam to heat to a desired temperature requires a large amount of steam.

To address such problems, using a heat pump as an energy-saving device is disclosed. For example, Patent Literature 1 proposes a device for increasing the heat utilization efficiency of a heat source using a heat pump.

### Citation List

### Patent Literature

Patent Literature 1: Japanese Patent Laid-Open No. 2020-528128

### Summary of Invention

### Technical Problem

The above conventional technology has the following problems.

With the technology described in Patent Literature 1, it is difficult to stably control the temperature with the heat pump when the heating medium supply device is used in a steel mill. This is because, if the hot drainage water, the properties of which are inferior, is directly put into a heat exchanger for the heat pump having a configuration that cannot be reassembled for cleaning, the heat exchange ability may be reduced due to scales or the like, or failures may occur due to a decrease in the flow rate. Further, when there is an incompatibility between the specified water temperature of a heat source of the heat pump and the temperature of exhaust heat, specifically, when the temperature of drainage water is higher than the specified water temperature of the heat source, it is necessary to lower the temperature of the drainage water to the specified water temperature of the heat source before putting the drainage water into the heat pump. Further, the performance of the heat pump is influenced by changes in the temperature of the low-temperature-side heat source of the heat pump, for example.

The present invention has been made in view of the above circumstances, and it is an object of the present invention to provide a heat recovery device and a heat recovery method each capable of maximizing the energy-saving effect in a cleaning process for a steel sheet. It is another object of the present invention to provide a method for producing a steel material using the heat recovery method.

### Solution to Problem

The inventors have conducted concentrated experiments and studies to solve the above problems. As a result, the inventors have found that the energy-saving effect can be maximized by using a heat pump and a heat exchanger in combination to supply heat to the heat pump at an appropriate temperature and flow rate, and also that a liquid to be put into the heat exchanger from the heat pump can be cleaned by directly or indirectly using water used in a business facility.

A heat recovery device according to the present invention that advantageously solves the above problems is configured as follows.
[1] A heat recovery device including
   a first heat exchanger that exchanges heat between high-temperature drainage water after being used for cleaning in a cleaning process for a steel sheet and make-up water for a cleaning process; a second heat exchanger that recovers heat from the drainage water having a temperature lowered through the first heat exchanger by heat exchange with a low-temperature-side heat source of a heat pump; and a heat pump that heats the make-up water having a temperature increased via the first heat exchanger, using heat recovered in the low-temperature-side heat source and power supplied to a compressor and an evaporator, and then supplies the heated make-up water as high-temperature make-up water.
[2] In the heat recovery device of [1] above, the make-up water heated by the heat pump has a temperature lower than 100°C, and the drainage water fed into the heat pump for heat recovery purposes has a temperature lower than 90°C.
[3] The heat recovery device of [1] or [2] above further includes a flow-channel switching portion that changes a flow channel for a heating medium in a heating-medium flow channel between the second heat exchanger and the heat pump; a measurement portion that measures an inlet heating-medium temperature T_{Ci} of the heating medium that enters the heat pump through the heating-medium flow channel; and a control unit that performs, based on the heating-medium temperature T_{Ci} measured by the measurement portion, feedback control or feedforward control on a flow rate at the flow-channel switching portion so that T_{Ci} ≤ Tc is satisfied, where Tc is an upper limit of the inlet heating-medium temperature.
[4] The heat recovery device of any one of [1] to [3] above further includes a third heat exchanger that exchanges heat between the make-up water and a high-temperature-side heat source of the heat pump.
[5] The heat recovery device of [4] above further includes a first flow-channel switching portion that changes a flow channel for a heating medium in a first heating-medium flow channel between the second heat exchanger and the heat pump; a measurement portion that measures an inlet heating-medium temperature T_{Ci} of the heating medium that enters the heat pump through the first heating-medium flow channel; a first control unit that performs, based on the heating-medium temperature T_{Ci} measured by the measurement portion, feedback control or feedforward control on a flow rate at the first flow-channel switching portion so that T_{Ci} ≤ Tc is satisfied, where Tc is an upper limit of the inlet heating-medium temperature; a second flow-channel switching portion that changes a flow channel for a heating medium in a second heating-medium flow channel between the third heat exchanger and the heat pump; a measurement portion that measures an outlet heating-medium temperature T_{Ho} of the heating medium that enters the heat pump through the second heating-medium flow channel; and a second control unit that performs, based on the heating-medium temperature T_{Ho} measured by the measurement portion, feedback control or feedforward control on a flow rate at the second flow-channel switching portion so that T_{Ho} ≤ T_{H} is satisfied, where T_{H} is an upper limit of the outlet heating-medium temperature.
[6] The heat recovery device of any one of [1] to [5] above further includes a heating means for heating the make-up water that has been preheated by the heat pump to a temperature lower than a preset temperature required for the cleaning process; a temperature control means for controlling the temperature of the make-up water; and a control unit that controls, based on a supply temperature and a supply volume of the make-up water that are required for the cleaning process, a temperature and a flow rate of the make-up water to be preheated by the heat pump, and an amount of energy to be used by the heating means for heating the preheated make-up water to the required supply temperature, taking into consideration the loss of energy that occurs in a path from a source of generation of the energy in a business facility to a supply destination of the energy, so as to reduce net energy consumption.
   A heat recovery method and a method for producing a steel sheet according to the present invention that advantageously solve the above problems are configured as follows.
[7] A heat recovery method including a first heat exchange step of exchanging heat between high-temperature drainage water after being used for cleaning in a cleaning process for a steel sheet and make-up water for a cleaning process; a second heat exchange step of recovering heat from the drainage water that has a temperature lowered via the first heat exchange step through heat exchange with a low-temperature-side heat source of a heat pump; and a cleaning water supplying step of heating the make-up water that has a temperature increased via the first heat exchange step, using heat recovered in the low-temperature-side heat source and power supplied to a compressor and an evaporator, and then supplying the heated make-up water as high-temperature make-up water.
[8] In the heat recovery method of [7] above, the make-up water heated by the heat pump has a temperature lower than 100°C, and the drainage water fed into the heat pump for heat recovery purposes has a temperature lower than 90°C.
[9] The heat recovery method of [7] or [8] above further includes a flow-channel switching portion that changes a flow channel for a heating medium in a heating-medium flow channel located between a portion where the second heat exchange step is performed and the heat pump, and performing feedback control or feedforward control on a flow rate at the flow-channel switching portion, based on T_{Ci} measured by a measurement portion so that T_{Ci} ≤ Tc is satisfied, provided that an inlet heating-medium temperature of the heating medium that enters the heat pump through the heating-medium flow channel is represented by T_{Ci} and that an upper limit of the inlet heating-medium temperature is represented by Tc.
[10] The heat recovery method of any one of [7] to [9] further includes a third heat exchange step of exchanging heat between the make-up water and a high-temperature-side heat source of the heat pump.
[11] The heat recovery method of [10] above includes providing a first flow-channel switching portion that changes a flow channel for a heating medium in a first heating-medium flow channel located between a portion where the second heat exchange step is performed and the heat pump, and a second flow-channel switching portion that changes a flow channel for a heating medium in a second heating-medium flow channel located between a portion where the third heat exchange step is performed and the heat pump. The method further includes performing feedback control or feedforward control on a flow rate at the first flow-channel switching portion based on T_{Ci} measured by a measurement portion so that T_{Ci} ≤ Tc is satisfied, provided that an inlet heating-medium temperature of the heating medium that enters the heat pump through the first heating-medium flow channel is represented by T_{Ci} and that an upper limit of the inlet heating-medium temperature is represented by Tc; and performing feedback control or feedforward control on a flow rate at the second flow-channel switching portion based on T_{Ho} measured by a measurement portion so that T_{Ho} ≤ T_{H} is satisfied, provided that an outlet heating-medium temperature of the heating medium that comes out of the heat pump through the second heating-medium flow channel is represented by T_{Ho} and that an upper limit of the outlet heating-medium temperature is represented by T_{H}.
[12] The heat recovery method of any one of [7] to [11] above further includes a heating step of heating the make-up water preheated by the heat pump to a temperature lower than a preset temperature required for the cleaning process; and a temperature control step of controlling the temperature of the make-up water, in which, based on a supply temperature and a supply volume of the make-up water required for the cleaning process, a temperature and a flow rate of the make-up water to be preheated by the heat pump and an amount of energy to be used by the heating means for heating the preheated make-up water to the required supply temperature are controlled, taking into consideration the loss of energy that occurs in a path from a source of generation of the energy in a business facility to a supply destination of the energy, so as to reduce net energy consumption.
[13] A method for producing a steel sheet, including a cleaning step of heating make-up water for use in a cleaning process for the steel sheet, using the heat recovery method of any one of [7] to [12] above.

### Advantageous Effects of Invention

The present invention provides a heat recovery device and method capable of supplying a heating medium with high energy efficiency and low cost by using a heat pump and a heat exchanger. The present invention also produces an environment-friendly steel sheet with saved energy by using such a heat recovery method to heat make-up water for a cleaning step for the steel sheet.

### Brief Description of Drawings

FIG. 1 is a system diagram showing an embodiment of the present invention.
FIG. 2 is a system diagram showing another embodiment of the present invention.
FIG. 3 is a system diagram showing a conventional method of heating make-up water for a cleaning solution.
FIG. 4 is a system diagram showing an embodiment including a flow-channel switching portion of the present invention.
FIG. 5 is a system diagram showing a configuration example of the flow-channel switching portion in FIG. 4.
FIG. 6 is a system diagram showing another embodiment including the flow-channel switching portion of the present invention.
FIG. 7(a) is a system diagram showing a configuration example of a second flow-channel switching portion, and FIG. 7 (b) is a system diagram showing a configuration example of a first flow-channel switching portion.

### Description of Embodiments

Hereinafter, a heat recovery method according to an embodiment of the present invention, and a heat recovery device used therefor will be described in detail.

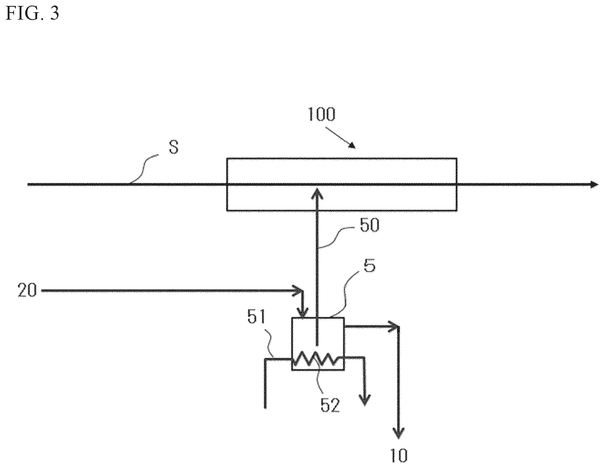

In a steel sheet cleaning facility of a cold rolling plant in a steel mill, a steel sheet is washed first, and is then cleaned with rinse water. In a rinsing/cleaning step, a rinse circulation tank is refilled with clean hot water, and at the same time, a rinse solution that has been used for cleaning is discharged from the rinse circulation tank. Conventionally, as shown in FIG. 3, a cleaning solution 50 in a rinse circulation tank 5 is heated with steam 51 and a heater 52 to improve the cleaning ability. Make-up water 20 is supplied to the rinse circulation tank 5, and part of a liquid in the tank is discharged as drainage water 10 to the outside of the system so as to be treated.

### <Heat recovery device>

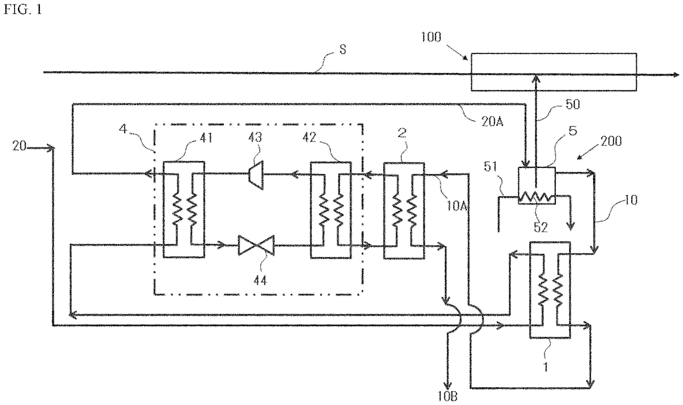

FIG. 1 shows a heat recovery device for use in a cleaning process 100 for a steel sheet S as an example of this embodiment. In FIG. 1, to effectively use heat, a first heat exchanger 1, which exchanges heat between drainage water 10 having a high temperature after being used for cleaning in the cleaning process for the steel sheet S, and make-up water 20 for a cleaning process, raises the temperature of the make-up water 20 and also lowers the temperature of the drainage water 10 having a high temperature after being used for cleaning. A second heat exchanger 2, which exchanges heat between drainage water 10A having a lowered temperature after being used for cleaning, and water in a heat pump 4, exchanges heat between the drainage water 10A having a lowered temperature after being used for cleaning, and water on a low-temperature-side heat source of the heat pump 4 to recover the heat.

The arrangement of the second heat exchanger 2 makes it possible to indirectly supply heat without directly putting the drainage water 10A having inferior properties after being used for cleaning, into the heat pump 4 that is not configured to be disassembled and cleaned.

The make-up water 20 with the temperature increased by the first heat exchanger 1 is put into a high-temperature side (condenser 41) of the heat pump 4. Then, the temperature of the make-up water 20 is increased with the heat recovered on the low-temperature side (evaporator 42) and with power supplied to a compressor 43 and the evaporator 42 so that the make-up water 20 with the increased temperature is further used as make-up water 20A in a cleaning-solution-temperature controlling process 200. The heat pump 4 is a typical heat pump including the condenser (heat radiator) 41, the evaporator (heat sink) 42, the compressor 43, and an expansion valve 44.

The temperature of the make-up water 20A heated by the heat pump 4 is preferably lower than 100°C, and the temperature of the drainage water 10A, which has been used for cleaning and is to be fed into the heat pump 4 for heat recovery purposes, is preferably less than 90°C.

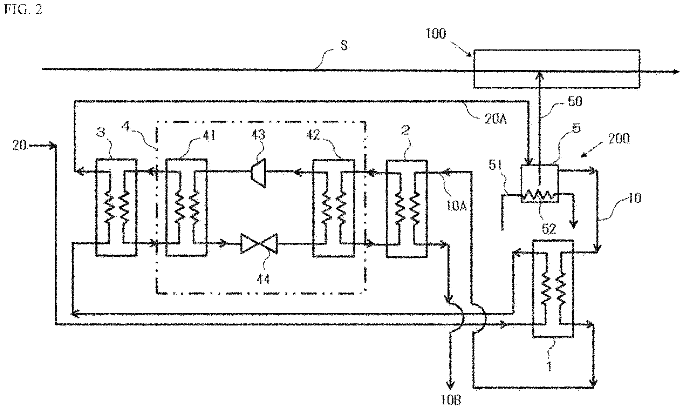

As another embodiment shown in FIG. 2, a third heat exchanger 3 is preferably arranged on the high-temperature side (condenser 41 side) of the heat pump. This is because although the properties of the make-up water 20 are superior to the properties of the drainage water 10 after being used for cleaning, arranging the third heat exchanger 3 on the high-temperature side (condenser 41 side) of the heat pump can allow a liquid with further superior properties to be used for the heat pump 4.

It is also possible to use steam 51 and a heater 52 in the cleaning-solution-temperature controlling process 200 to control the temperature of a cleaning solution to be fed to the cleaning process 100.

It is also possible to generate the make-up water 20 having a temperature lower than the preset temperature required for the cleaning process, and provide a heating means for heating the make-up water 20A directly or indirectly generated by the heat pump 4, and also a temperature control means for controlling the temperature of the make-up water 20A. It is also possible to further provide a control unit that controls, based on the supply temperature and the supply volume of the make-up water 20 required for the cleaning process, the temperature and the flow rate of the make-up water 20 to be preheated by the heat pump 4, and the amount of energy to be used by the heating means for heating the preheated make-up water 20A to the required supply temperature, taking into consideration the loss of energy that occurs in a path from the source of generation of the energy in a business facility to the supply destination of the energy, so as to reduce the net energy consumption.

Herein, the steam 51, the electric heater 52, or the like can be applied as the above heating means. For example, when steam is used as the heating means, the temperature and the flow rate of the make-up water 20 to be preheated, and the amount of steam used to heat the preheated make-up water 20A to the required supply temperature are controlled, taking into consideration the loss of steam that occurs in a path from the source of generation of the steam in a business facility to the supply destination of the steam so as to reduce the net energy consumption.

An inlet-side temperature sensor that measures the temperature of cooling water and a flowmeter that measures the flow rate of the cooling water can be provided in a pipe for supplying water on the low-temperature-side heat source of the heat pump 4. It is also possible to measure the pressure at each of the inlet and the outlet of the evaporator (heat sink) 42 to calculate the flow rate from the pressure difference and the structure of the evaporator 42.

The condenser (heat radiator) 41 may be supplied with the make-up water having a temperature increased by the first heat exchanger 1, and may be also connected to a hot-air supply port for supplying the make-up water 20A having a temperature increased by the thermal energy obtained via heat exchange at the condenser (heat radiator) 41. A temperature sensor that measures the liquid temperature is preferably provided on each of the inlet side and the outlet side of the condenser (heat radiator) 41.

Data obtained with the temperature sensors can be used to control the drive of the heat pump 4. It is possible to perform feedback control and feedforward control either alone or in combination. For example, it is possible to perform feedback control of computing the temperature gap between the temperature of the preheated make-up water 20A and the preset temperature of the preheated water, and computing the amount of power of the heat pump 4 using the computation result and then outputting it, or perform feedforward control of computing the amount of power of the heat pump 4 from the inlet-side temperature and flow rate of water (cold water) as the low-temperature-side heat source of the heat pump, and from the temperature. For such control, typical PID control or inverter control is preferably used, for example. On the heat pump side, such control may be performed with one or both of the compressor 43 and the expansion valve 44.

The temperature of the preheated make-up water 20A to be generated by the heat pump 4 is preferably set based on the flow rate and the output of the heating means, such as the steam 51, such that the overall energy efficiency becomes high.

The heat pump 4 is equipped, downstream of the supply port for the preheated make-up water 20A, with the heating means by the steam 51 or the like for heating the preheated make-up water 20A to the preset temperature. It is preferable to supply the make-up water for cleaning the steel sheet via the heating means. It is also preferable to provide a means for measuring the temperature and the flow rate of the make-up water on each of the inlet side and outlet side of the heating means so as to control the supply volume of heat, such as the steam 51, based on the results of the measurement. As the control method, feedback control and feedforward control may be used either alone or in combination.

The make-up water to enter the rinse circulation tank 5 of the present embodiment is obtained by heating the preheated make-up water 20A using, for example, steam. Therefore, the amount of steam used to heat the make-up water in this embodiment can be reduced compared to when heating make-up water at room temperature to the preset temperature using the steam 51, thereby achieving energy saving.

Further, even when the preset temperature of the make-up water 20A is too high to be achieved by the heat pump, it is possible to obtain the required make-up water at low costs. Specifically, hot air at the preset temperature is generated using the preheated make-up water 20A and the steam 51 as the heating means in combination. This also improves controllability at start-up. The number of heat pumps 4 to generate preheated make-up water may be determined in accordance with the capacities of the respective heat pumps 4 as well as the specifications (such as the flow rate and the temperature) of the hot-air supply device.

To maximize the performance of the heat pump 4, the fluid temperature may be controlled by providing a three-way valve in a heating-medium flow channel between the second heat exchanger 2 and the heat pump 4 and/or between the third heat exchanger 3 and the heat pump 4.

To maximize the performance of the heat pump 4, the fluid temperature may be controlled by providing a flow-channel switching portion in a heating-medium flow channel between the second heat exchanger 2 and the heat pump 4 and/or between the third heat exchanger 3 and the heat pump 4. The flow-channel switching portion includes a three-way valve and/or a bypass valve.

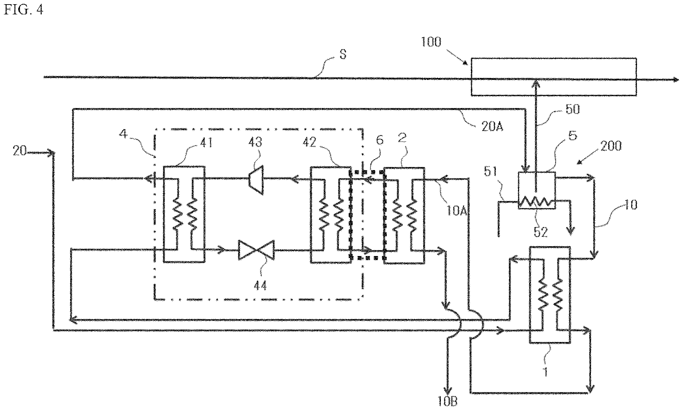

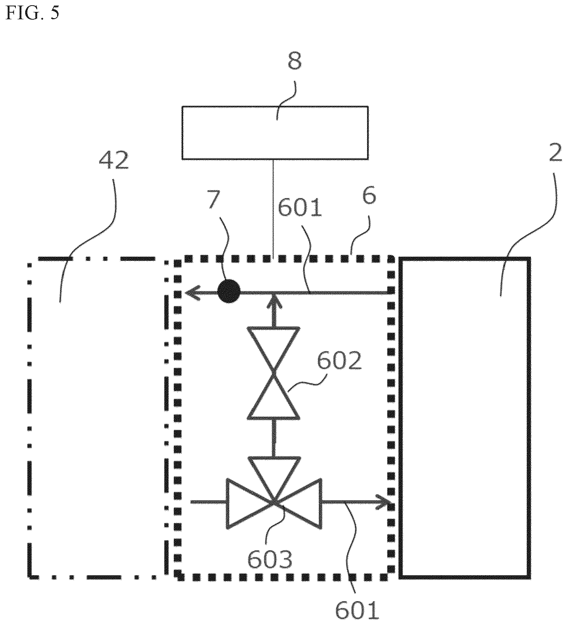

FIGs. 4 and 5 are diagrams each showing a state in which a flow-channel switching portion 6 (three-way valve 603 or a bypass valve) is provided in a heating-medium flow channel 601 between the second heat exchanger 2 and the heat pump 4.

Provided that the inlet heating-medium temperature of a heating medium that enters the heat pump 4 through the heating-medium flow channel 601 is T_{Ci} and that the upper limit of the inlet heating-medium temperature is Tc, a control unit 8 performs feedback control or feedforward control on the flow-channel switching portion 6 based on T_{Ci} measured by a measurement portion 7, such as a thermocouple, so that T_{Ci} ≤ Tc is satisfied. In response to the control of the control unit 8, the flow-channel switching portion 6 changes a flow channel for the heating medium in the heating-medium flow channel 601 between the second heat exchanger 2 and the heat pump 4. As the flow-channel switching portion 6 controls the flow channel and the flow rate based on the actual measurement value, the fluid temperature can be controlled with higher accuracy.

When a fluid is bypassed by the flow-channel switching portion 6 such that the fluid does not pass through the second heat exchanger 2, the flow rates in the two channels do not necessarily become constant because the pressure loss in the bypass channel is smaller than the pressure loss in the channel of the heat exchanger. Therefore, a flow control valve 602 may be provided to achieve constant flow rates in the two channels. The valve opening position of the flow control valve 602 may be set in advance, or may be subjected to feedback control or feedforward control by the control unit 8. This can suppress the fluctuation of the flow rate even when the flow channel and the flow rate are controlled by the flow-channel switching portion 6, and thus control the fluid temperature with even higher accuracy.

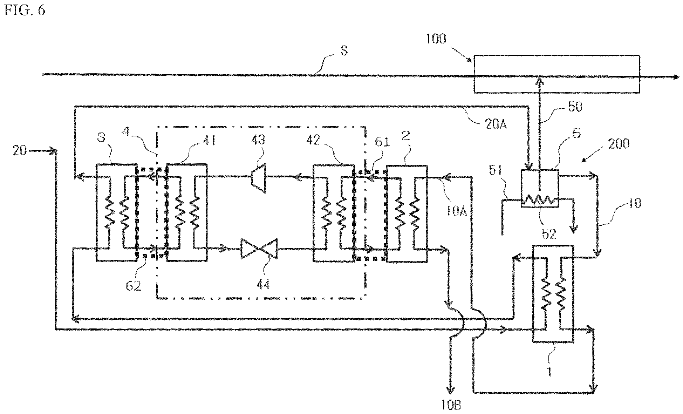

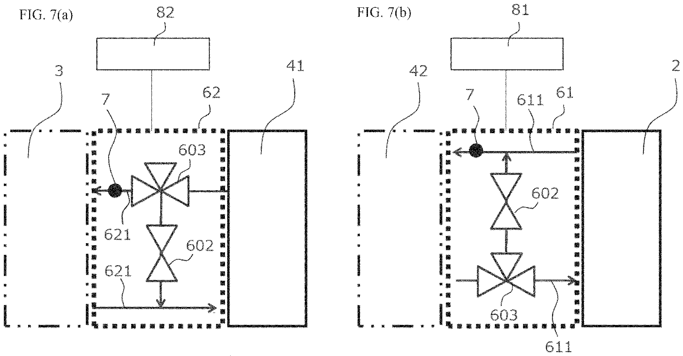

FIGs. 6 and 7 are diagrams each showing a state in which a second flow-channel switching portion 62 (three-way valve 603 or bypass valve) is provided in a second heating-medium flow channel 621 between the third heat exchanger 3 and the heat pump 4, in addition to the state in FIG. 4. In FIGs. 6 and 7, the flow-channel switching portion is referred to as a first flow-channel switching portion 61, the heating-medium flow channel is referred to as a first heating-medium flow channel 611, and the control unit is referred to as a first control unit 81.

Provided that the outlet heating-medium temperature of a heating medium that comes out of the heat pump 4 through the second heating-medium flow channel 621 is T_{Ho} and that the upper limit of the outlet heating-medium temperature is T_{H}, a second control unit 82 performs feedback control or feedforward control on the second flow-channel switching portion 62 based on T_{Ho} measured by a measurement portion, such as a thermocouple, so that T_{Ho} ≤ T_{H} is satisfied. In response to the control of the second control unit 82, the second flow-channel switching portion 62 changes a flow channel for the heating medium in the second heating-medium flow channel 621 between the third heat exchanger 3 and the heat pump 4. As the second flow-channel switching portion 62 controls the flow channel and the flow rate based on the actual measurement value, the fluid temperature can be controlled with high accuracy.

The flow control valve 602 may also be provided on the side of the second flow-channel switching portion 62, taking into consideration the difference in pressure loss between the bypass channel and the channel of the heat exchanger. Thus, whether the flow channels or the flow rate is adjusted by the second flow-channel switching portion 62, the fluctuation in the flow rate can be reduced, thereby controlling the fluid temperature with even higher accuracy.

Note that the control unit, the first control unit, and the second control unit may be either physically different components or the physically same components.

### <Heat recovery method>

A heat recovery method of this embodiment will be described using the above-described heat recovery device.

The heat recovery method of this embodiment effectively utilizes the heat of drainage water from a rinse circulation tank, which has never been performed by the conventional technology, and exerts the energy-saving effect by increasing the temperature of hot water to refill the rinse circulation tank, thus reducing the amount of steam used to heat a cleaning solution in the rinse circulation tank.

In a first heat exchange step, the first heat exchanger 1 exchanges heat between the drainage water 10 having a high temperature after being used for cleaning in a cleaning process for a steel sheet, and the make-up water 20 for a cleaning process. This is in order to increase the temperature of the make-up water for a cleaning process with the heat of the high-temperature drainage water after being used for cleaning.

In a second heat exchange step, the second heat exchanger 2 exchanges heat between the drainage water 10A, which has been used for cleaning and has a temperature lowered in the first heat exchange step, and the low-temperature-side heat source of the heat pump. This is in order to further transfer the heat of the drainage water 10A, which has been used for cleaning and has a temperature lowered in the first heat exchange step, to the low-temperature-side heat source of the heat pump.

In a cleaning water refilling step, the heat of the drainage water 10A, which has been used for cleaning and has a temperature lowered in the first heat exchange step, is recovered in the low-temperature-side heat source of the heat pump, so that the temperature of the make-up water heated in the first heat exchange step is further increased, and the resulting water is supplied as the make-up water 20A at a high temperature to the rinse circulation tank. This contributes to increasing the temperature of the make-up water with the recovered heat and with the power for operating the heat pump.

Therefore, when a heat recovery method is performed with the heat recovery device according to the embodiment, the temperature of the make-up water fed into the rinse circulation tank is higher than that when a heat recovery method is performed with the conventional heat recovery device. Thus, it is possible to reduce the amount of heat of the steam 51 or the heater 52 used in the rinse circulation tank as compared to when the conventional method is used. That is, the power used for heating can be reduced, and the power-saving effect can thus be achieved.

Herein, the temperature of the make-up water 20A heated by the heat pump is set lower than 100°C so that it does not exceed the preset temperature of the cleaning solution in the rinse circulation tank. In addition, the temperature of the drainage water 10A to be fed into the heat pump for heat recovery purposes is set lower than 90°C, taking into consideration the specified temperature of the heat source of the heat pump.

It is further preferable to provide a third heat exchange step of exchanging heat between the make-up water and the high-temperature-side heat source of the heat pump with the third heat exchanger 3. This is in order to avoid a problem that if the make-up water is directly drawn into the heat pump, the properties of the make-up water would directly affect the maintenance of the heat pump.

A heat recovery method according to another embodiment includes a heating step of heating the make-up water 20A, which has been heated by the heat pump, in the rinse circulation tank. Herein, the make-up water 20A is heated to a temperature lower than the preset temperature required for a cleaning process. In the heating step, it is preferable to also provide the cleaning-solution-temperature controlling process 200 to control the temperature of the make-up water. It is preferable to, based on the supply temperature and the supply volume of the make-up water that are required for the cleaning process, control the temperature and the flow rate of the make-up water to be preheated by the heat pump, and the amount of energy to be used by the heating means for heating the preheated make-up water to the required supply temperature, taking into consideration the loss of energy that occurs in a path from the source of generation of the energy in a business facility to the supply destination of the energy, so as to reduce the net energy consumption.

The heat recovery method according to the present embodiment can be applied to a steel sheet production process that includes a cleaning step of heating make-up water for use in a cleaning process for a steel sheet.

### Example

### [Example 1]

A steel sheet was cleaned in a steel mill, using a heat recovery device with the configuration shown in FIG. 1, a cleaning process, and a cleaning-solution-temperature controlling process. The heat recovery device includes a first heat exchanger, a second heat exchanger, and a heat pump. The make-up water supplied to the first heat exchanger has a temperature of 55°C, while the high-temperature drainage water after being used for cleaning has a temperature of 75°C. The drainage water, which had been used for cleaning and had a temperature lowered via the first heat exchanger, was utilized as the low-temperature-side heat source of the heat pump to recover heat. The make-up water, which has the temperature increased via the first heat exchanger, was further increased in temperature with the recovered heat and power. Then, the make-up water heated to a high temperature by the heat pump was supplied to the rinse circulation tank, and was heated with steam, so that a cleaning solution was produced in the rinse circulation tank.

The make-up water heated by the heat pump has a temperature of 73°C. Meanwhile, the drainage water fed into the heat pump for heat recovery (drainage water used for cleaning and lowered in temperature by the first heat exchanger) has a temperature of 62°C.

In this example, the power consumption and heat utilization efficiency were reduced by about 30% and more than 60%, respectively, compared to a heat recovery method using the conventional heat recovery device, achieving excellent results.

### [Example 2]

As shown in FIG. 2, a third heat exchanger was further arranged on the high-temperature-side heat source of the heat pump in the configuration of the heat recovery device shown in Example 1.

The arrangement of the third heat exchanger could prevent the make-up water from flowing directly into the heat pump and maintain the cleanliness of the heat exchanger in the heat pump, thus reducing the frequency of cleaning maintenance.

### [Example 3]

As shown in FIG. 3, a steel sheet was cleaned by the conventional heat recovery device.

A large volume of steam was used in the rinse circulation tank to generate hot air to be used in a drying process for a steel sheet, and further power was required to cool, in a cooling tower, cooling water for a cooling process for the steel sheet. The power consumption of the conventional heat recovery device was found to be about 3.5 times those of Examples 1 and 2.

Although the above examples describe the embodiment of the present invention, the present invention is not limited thereto.

### Industrial Applicability

A heat recovery device and a heat recovery method of the invention that are used for a cleaning process for a steel sheet are applicable to not only a particular step but also all steps that use heat.

### Reference Signs List

- 1: first heat exchanger
- 2: second heat exchanger
- 3: third heat exchanger
- 4: heat pump
- 41: condenser
- 42: evaporator
- 43: compressor
- 44: expansion valve
- 5: rinse circulation tank
- 50: cleaning solution
- 51: steam
- 52: heater
- 6: flow-channel switching portion
- 601: heating-medium flow channel
- 602: flow control valve
- 603: three-way valve
- 61: first flow-channel switching portion
- 611: first heating-medium flow channel
- 62: second flow-channel switching portion
- 621: second heating-medium flow channel
- 7: measurement portion
- 8: control unit
- 81: first control unit
- 82: second control unit
- 10: drainage water after being used for cleaning
- 10A: drainage water after being used for cleaning (after passing through first heat exchanger)
- 10B: drainage water after being used for cleaning (after passing through second heat exchanger)
- 20: make-up water
- 20A: make-up water (after passing through heat pump)
- 50: cleaning solution
- 100: cleaning process
- 200: cleaning-solution-temperature controlling process
- S: steel sheet

## Claims

1. A heat recovery device, comprising
a first heat exchanger that exchanges heat between high-temperature drainage water after being used for cleaning in a cleaning process for a steel sheet and make-up water for a cleaning process;
a second heat exchanger that recovers heat from the drainage water having a temperature lowered through the first heat exchanger by heat exchange with a low-temperature-side heat source of a heat pump; and
a heat pump that heats the make-up water having a temperature increased via the first heat exchanger, using heat recovered in the low-temperature-side heat source and power supplied to a compressor and an evaporator, and then supplies the heated make-up water as high-temperature make-up water.

2. The heat recovery device according to claim 1, wherein
the make-up water heated by the heat pump has a temperature lower than 100°C, and
the drainage water fed into the heat pump for heat recovery purposes has a temperature lower than 90°C.

3. The heat recovery device according to claim 1 or 2, further comprising
a flow-channel switching portion that changes a flow channel for a heating medium in a heating-medium flow channel between the second heat exchanger and the heat pump;
a measurement portion that measures an inlet heating-medium temperature T_{Ci} of the heating medium that enters the heat pump through the heating-medium flow channel; and
a control unit that performs, based on the heating-medium temperature T_{Ci} measured by the measurement portion, feedback control or feedforward control on a flow rate at the flow-channel switching portion so that T_{Ci} ≤ Tc is satisfied, where Tc is an upper limit of the inlet heating-medium temperature.

4. The heat recovery device according to any one of claims 1 to 3, further comprising
a third heat exchanger that exchanges heat between the make-up water and a high-temperature-side heat source of the heat pump.

5. The heat recovery device according to claim 4, further comprising:
a first flow-channel switching portion that changes a flow channel for a heating medium in a first heating-medium flow channel between the second heat exchanger and the heat pump;
a measurement portion that measures an inlet heating-medium temperature T_{Ci} of the heating medium that enters the heat pump through the first heating-medium flow channel;
a first control unit that performs, based on the heating-medium temperature T_{Ci} measured by the measurement portion, feedback control or feedforward control on a flow rate at the first flow-channel switching portion so that T_{Ci} ≤ Tc is satisfied, where Tc is an upper limit of the inlet heating-medium temperature;
a second flow-channel switching portion that changes a flow channel for a heating medium in a second heating-medium flow channel between the third heat exchanger and the heat pump;
a measurement portion that measures an outlet heating-medium temperature T_{Ho} of the heating medium that enters the heat pump through the second heating-medium flow channel; and
a second control unit that performs, based on the heating-medium temperature T_{Ho} measured by the measurement portion, feedback control or feedforward control on a flow rate at the second flow-channel switching portion so that T_{Ho} ≤ T_{H} is satisfied, where T_{H} is an upper limit of the outlet heating-medium temperature.

6. The heat recovery device according to any one of claims 1 to 5, further comprising:
a heating means for heating the make-up water that has been preheated by the heat pump to a temperature lower than a preset temperature required for the cleaning process;
a temperature control means for controlling the temperature of the make-up water; and
a control unit that controls, based on a supply temperature and a supply volume of the make-up water that are required for the cleaning process, a temperature and a flow rate of the make-up water to be preheated by the heat pump, and an amount of energy to be used by the heating means for heating the preheated make-up water to the required supply temperature, taking into consideration the loss of energy that occurs in a path from a source of generation of the energy in a business facility to a supply destination of the energy, so as to reduce net energy consumption.

7. A heat recovery method comprising:
a first heat exchange step of exchanging heat between high-temperature drainage water after being used for cleaning in a cleaning process for a steel sheet and make-up water for a cleaning process;
a second heat exchange step of recovering heat from the drainage water that has a temperature lowered via the first heat exchange step through heat exchange with a low-temperature-side heat source of a heat pump; and
a cleaning water supplying step of heating the make-up water that has a temperature increased via the first heat exchange step, using heat recovered in the low-temperature-side heat source and power supplied to a compressor and an evaporator, and then supplying the heated make-up water as high-temperature make-up water.

8. The heat recovery method according to claim 7, wherein
the make-up water heated by the heat pump has a temperature lower than 100°C, and
the drainage water fed into the heat pump for heat recovery purposes has a temperature lower than 90°C.

9. The heat recovery method according to claim 7 or 8, further comprising
providing a flow-channel switching portion that changes a flow channel for a heating medium in a heating-medium flow channel between a portion where the second heat exchange step is performed and the heat pump, and
performing feedback control or feedforward control on a flow rate at the flow-channel switching portion, based on T_{Ci} measured by a measurement portion so that T_{Ci} ≤ Tc is satisfied, provided that an inlet heating-medium temperature of the heating medium that enters the heat pump through the heating-medium flow channel is represented by T_{Ci} and that an upper limit of the inlet heating-medium temperature is represented by Tc.

10. The heat recovery method according to any one of claims 7 to 9, further comprising
a third heat exchange step of exchanging heat between the make-up water and a high-temperature-side heat source of the heat pump.

11. The heat recovery method according to claim 10, further comprising
providing a first flow-channel switching portion that changes a flow channel for a heating medium in a first heating-medium flow channel located between a portion where the second heat exchange step is performed and the heat pump, and a second flow-channel switching portion that changes a flow channel for a heating medium in a second heating-medium flow channel located between a portion where the third heat exchange step is performed and the heat pump;
performing feedback control or feedforward control on a flow rate at the first flow-channel switching portion based on T_{Ci} measured by a measurement portion so that T_{Ci} ≤ Tc is satisfied, provided that an inlet heating-medium temperature of the heating medium that enters the heat pump through the first heating-medium flow channel is represented by T_{Ci} and that an upper limit of the inlet heating-medium temperature is represented by Tc; and
performing feedback control or feedforward control on a flow rate at the second flow-channel switching portion based on T_{Ho} measured by a measurement portion so that T_{Ho} ≤ T_{H} is satisfied, provided that an outlet heating-medium temperature of the heating medium that comes out of the heat pump through the second heating-medium flow channel is represented by T_{Ho} and that an upper limit of the outlet heating-medium temperature is represented by T_{H}.

12. The heat recovery method according to any one of claims 7 to 11, further comprising
a heating step of heating the make-up water preheated by the heat pump to a temperature lower than a preset temperature required for the cleaning process, and
a temperature control step of controlling the temperature of the make-up water,
wherein,
based on a supply temperature and a supply volume of the make-up water required for the cleaning process, a temperature and a flow rate of the make-up water to be preheated by the heat pump and an amount of energy to be used by the heating means for heating the preheated make-up water to the required supply temperature are controlled, taking into consideration the loss of energy that occurs in a path from a source of generation of the energy in a business facility to a supply destination of the energy, so as to reduce net energy consumption.

13. A method for producing a steel sheet, comprising
a cleaning step of heating make-up water for use in a cleaning process for the steel sheet, using the heat recovery method according to any one of claims 7 to 12.
